# EUROPÄISCHE PATENTSCHRIFT

(11) **EP 0 198 425 B1**
(45) Veröffentlichungstag und Bekanntmachung des Hinweises auf die Patenterteilung: **27.01.1993**
(21) Anmeldenummer: 86104908.8
(22) Anmeldetag: 10.04.1986
(51) Int. Cl.: H04J 3/16, H04Q 11/04

(54) **Breitbandiges dienstintegriertes Nachrichtenübertragungssystem**
Large bandwidth service-integrated information transmission system
Système de transmission d'informations à large bande et à intégration de services

(30) Priorität: 12.04.1985 DE 3513083
(43) Veröffentlichungstag der Anmeldung: 22.10.1986
(73) Patentinhaber: ALCATEL N.V., NL-1077 XX Amsterdam (NL); Alcatel SEL Aktiengesellschaft, D-70435 Stuttgart (DE)
(72) Erfinder: Ali, Amar, Dr., D-7000 Stuttgart 1 (DE)
(74) Vertreter: Kugler, Hermann, Dipl.-Phys.

(56) Entgegenhaltungen:
- DE-A- 3 129 731
- FR-A- 2 522 908

## Beschreibung

Die Erfindung betrifft ein dienstintegriertes digitales Nachrichtenübertragungssystem nach dem Oberbegriff des Patentanspruchs 1.

Ein derartiges System ist bekannt aus der DE-A1 31 29 731.

Dort werden verschiedene Lösungen des Problems beschrieben, das sich daraus ergibt, daß die zu übertragenden Breitband- und Schmalbandsignale Bitfolgefrequenzen haben, die nicht ganzzahlig durch einander teilbar sind, z.B. ist 34,368 nicht durch 2,048 ganzzahlig teilbar (Seite 9, 2. Absatz).

Zum Zusammenfassen von Breitbandsignalen mit je 34,368 Mbit/s und Schmalbandsignalen mit 2,048 Mbit/s wird zunächst vorgeschlagen, durch Multiplexen der Schmalbandsignale zu einem Schmalband-Multiplexsignal und "Auffüllen" von dessen Bitfolgefrequenz auf eine höhere Bitfolgefrequenz und durch Multiplexen von vier Breitbandsignalen zu einem Breitband-Multiplexsignal zu erreichen, daß die Bitfolgefrequenz des Breitband-Multiplexsignals und die des aufgefüllten Schmalband-Multiplexsignals sich um einen ganzzahligen Faktor unterscheiden, z.B. um den Faktor 16. Dann werden die beiden zuletzt genannten Signale in einem (16+1): 1-Multiplexer zu einem Multiplexsignal zusammengefaßt.

Im weiteren Beschreibungsteil (auf Seite 10) der genannten Veröffentlichung wird die zuvor beschriebene Lösung als vom notwendigen Aufwand her nachteilig bezeichnet und als Alternative ein Multiplex-Konzept beschrieben, bei dem zur Lösung desselben Problems nicht die Schmalband-Signale auf einen günstigen Wert ihrer Bitfolgefrequenz, sondern die Breitband-Signale "aufgefüllt" werden, nämlich auf ein ganzzahliges Vielfaches der Bitfolgefrequenz der Schmalbandsignale. Beispielsweise wird das Breitbandsignal durch eine geeignete Codierung von vorneherein so erzeugt, daß seine Bitfolgefrequenz das 16-fache eines Schmalband-Signals beträgt (S. 10 unten). Durch Teilen eines solchen Breitband-Signals durch den genannten Faktor werden nun z.B. 16 Digitalsignale aus dem Breitband-Signal gebildet, deren Bitfolgefrequenz gleich der der zu übertragenden Schmalband-Signale ist, und diese Digitalsignale werden zusammen mit den zu übertragenden Schmalband-Signalen (z.B. drei Schmalband-Signalen) in einem Multiplexer zu dem gewünschten Multiplexsignal (z.B. mit 38,912 Mbit/s) zusammengefaßt.

Solche Lösungen sind nicht dazu geeignet, Schmalband-Signale und Breitband-Signale, die von vorneherein ein ganzzahliges Verhältnis ihrer Bitfolgefrequenzen haben, im Multiplex zusammenzufassen. Für solche Signale besteht auch der Wunsch, eine variable Anzahl von Breitband-Signalen und Schmalband-Signalen verarbeiten zu können.

Es ist daher die Aufgabe der vorliegenden Erfindung, ein System der eingangs genannten Art anzugeben, dessen Multiplexer und Demultiplexer dazu ausgelegt sind, Schmalband- und Breitband-Signale, deren Bitfolgefrequenzen in einem ganzzahligen Verhältnis zueinander stehen, zu verarbeiten und das hinsichtlich der Anzahl von verarbeitbaren Signalen flexibel ist.

Die Aufgabe wird wie im Patentanspruch 1 angegeben gelöst. Weiterbildungen ergeben sich aus den Unteransprüchen.

Die Erfindung wird nun anhand der Zeichnungen beispielsweise näher erläutert. Es zeigen:
- Fig. 1a und Fig. 1b: den Grundaufbau eines Multiplexers und des zugehörigen Demultiplexers eines Systems mit einem Breitband- und 4 Schmalsignalen,
- Fig. 2a und Fig. 2b: den Grundaufbau eines Multiplexers und zugehörigen Demultiplexers eines Systems mit 4 Breitband- und 16 Schmalbandsignalen
- Fig. 3a und Fig. 3b: eine detailliertere Ausführungsform eines Multiplexers und Demultiplexers zur Realisierung der Multiplexer-/Demultiplexerfunktionen nach den Figuren 1 und 2 ohne Verwendung eines einen Leitungscode erzeugenden Codewandlers,
- Fig. 4a und Fig. 4b: einen Multiplexer/Demultiplexer nach Fig. 3, jedoch jeweils mit einem Codewandler
- Fig. 5: den Grundaufbau eines Multiplexers eines Systems mit einem Breitband- und 8 Schmalbandsignalen und
- Fig. 6: ein Ausführungsbeispiel zur Realisierung des Multiplexer-Grundaufbaus nach Fig. 5.

In der folgenden Beschreibung steht der Ausdruck "Schmalbandsignal" für ein binäres Digitalsignal mit der für die erste Stufe der PCM-Hierarchie genormten Bitfolgefrequenz von 2,048 Mbit/s, z. B. ein PCM-30-Zeitmultiplex-Signal oder ein aus zwei Stereotonsignalen zusammengesetztes Zeitmultiplex-Signal oder ein aus anderen Digitalsignalen zusammengesetztes Zeitmultiplexsignal. Der Ausdruck "Breitbandsignal" bedeutet ein binäres Digitalsignal mit der für die vierte Stufe der PCM-Hierarchie genormten Bitfolgefrequenz von 139,264 Mbit/s, z. B. ein aus einem digitalen Videosignal mit 135 Mbit/s und anderen Digitalsignalen (Fernsehtonsignalen u. a.) zusammengesetztes Zeitmultiplexsignal.

Der Multiplexer 100 in Fig. 1a hat vier Eingänge S₁ bis S₄, denen 4 Schmalbandsignale zugeführt werden, und einen Eingang B, dem ein Breitbandsignal zugeführt wird. Die Takte der Eingangssignale sind vom Netztakt abgeleitet, also zueinander synchron. Der Multiplexer 100 faßt in einem ersten Teil M1 die 4 Schmalbandsignale und eine intern mit einer Bitfolgefrequenz von 512 kbit/s erzeugte Synchronisierinformation zu einem Schmalband-Multiplexsignal SM mit einer Bitfolgefrequenz von 8,704 Mbit/s zusammen. Dieses Schmalband-Multiplexsignal gelangt über einen mit dem Ausgang des Multiplexer-Teils M1 verbundenen Schalter S auf eine mit der Nr. 17 bezeichnete Eingangsleitung eines Multiplexer-Teils M3.

Falls das Schmalband-Multiplexsignal in einem externen Schmalband-Multiplexer gebildet wird, so wird es einem Eingang SM zugeführt, und dieser wird über den Schalter S mit der Eingangsleitung 17 verbunden.

Der Ausdruck "Schmalband-Multiplexsignal" soll nicht bedeuten, daß dieses Signal schmalbandig ist, sondern daß es aus Schmalbandsignalen im Zeitmultiplex zusammengesetzt ist. Dies gilt auch für die Beschreibung der übrigen Ausführungsbeispiele.

In einem zweiten Teil M2 des Multiplexers 100 wird das am Eingang B erscheinende Breitbandsignal mittels einer Anordnung von Serien-Parallel-Wandlern in Digitalsignale aufgeteilt, deren Bitfolgefrequenz untereinander einheitlich und gleich der Bitfolgefrequenz des Schmalband-Multiplexsignals SM ist. Im gezeigten Beispiel sind dies 16 Digitalsignale B₁ bis B₁₆, mit jeweils einer Bitfolgefrequenz von 8,704 Mbit/s, die über die 16 Eingangsleitungen 1 bis 16 dem Multiplexer-Teil M3 zugeführt werden.

Der dritte Teil M3 des Multiplexers faßt diese Digitalsignale B₁ bis B₁₆ und das Schmalband-Multiplexsignal SM zum Zeitmultiplexsignal zusammen, das am Ausgang M des Multiplexers 100 erscheint.

Das Wesentliche an diesem Grundaufbau eines Multiplexers 100 ist das Merkmal, daß durch Aufteilen des Breitbandsignals in parallele Digitalsignale und durch Zeitmultiplexbildung von Schmalbandsignalen eine Gruppe von Digitalsignalen mit untereinander einheitlicher Bitfolgefrequenz gewonnen wird, wobei diese Bitfolgefrequenz geringer ist als die Bitfolgefrequenz des Breitbandsignals. Diese geringere Bitfolgefrequenz erleichtert die weitere Verarbeitung im Multiplexer-Teil M3, für die an späterer Stelle noch einige Beispiele angegeben werden.

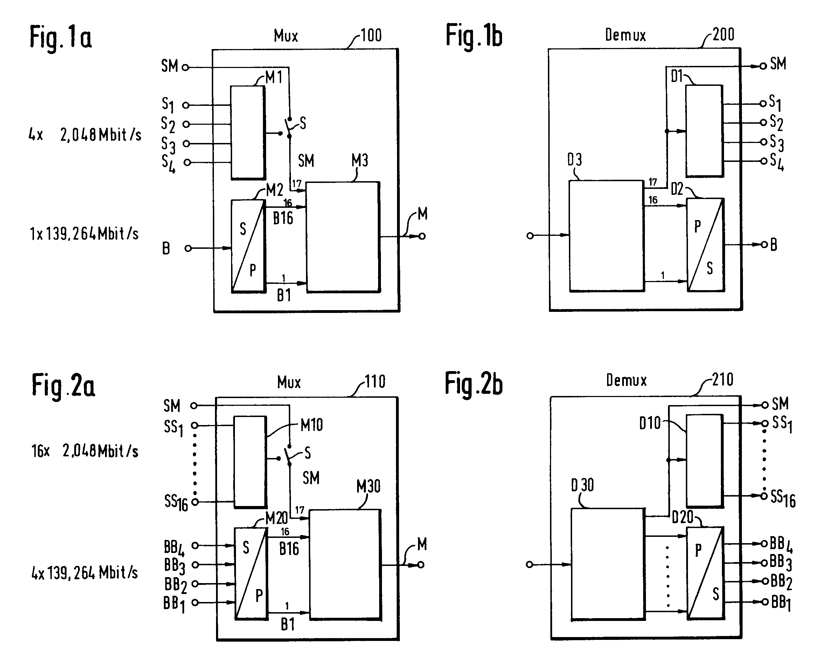

Wenn sich der Multiplexer 100 in der Ortsvermittlungsstelle eines dienstintegrierten Breitbandkommunikationssystems befindet, so befindet sich der in Fig. 1b gezeigte Demultiplexer 200 beim Teilnehmer und dient dazu, das zum Teilnehmer über eine vorzugsweise optische Übertragungsstrecke übertragene Zeitmultiplexsignal wieder in die verschiedenen Schmalbandsignale für die verschiedenen Kommunikationsdienste und das Breitbandsignal aufzulösen. Der Demultiplexer 200 hat einen dem Multiplexer-Teil M3 entsprechenden Teil D3, der das an seinem Eingang erscheinende Zeitmultiplexsignal in das Schmalband-Multiplexsignal und in die 16 Digitalsignale auflöst. Das Schmalband-Multiplexsignal erscheint am Ausgang Nr. 17 und gelangt auf einen Demultiplexerausgang SM und parallel auf den Eingang eines Demultiplexer-Teils D1, der dem Multiplexer-Teil M1 entspricht und es in die vier Schmalbandsignale zerlegt, die an den Ausgängen S₁ bis S₄ erscheinen.

Das am Ausgang SM erscheinende nicht aufgelöste Schmalband-Multiplexsignal kann über eine Koaxialleitung, die durch verschiedene Wohn- oder Geschäftsräume des Teilnehmers verläuft, zu mehreren Schmalband-Demultiplexern übertragen werden, die ebenso wie der Demultiplexer-Teil D1 arbeiten und jeweils das Schmalbandsignal aus dem Schmalband-Multiplexsignal entnehmen, das für das jeweils zugehörige Endgerät oder die jeweils zugehörige Gruppe von Endgeräten bestimmt ist.

Alternativ hierzu können die verschiedenen Endgeräte eines Teilnehmers auch über parallele Leitungen an den Demultiplexer 200, d. h. an seine Ausgänge S₁ bis S₄ angeschlossen werden.

Ein Demultiplexer-Teil D2, der dem Multiplexer-Teil M2 entspricht, faßt mit Hilfe einer Anordnung von Parallel-Serien-Wandlern die 16 Digitalsignale wieder zu dem Breitbandsignal zusammen, das an seinem Ausgang B erscheint.

Hinsichtlich der Funktion des Multiplexer-Teils M3 und des Demultiplexer-Teils D3 gibt es verschiedene Möglichkeiten:
a) Der Multiplexer-Teil M3 bildet sein am Ausgang M erscheinendes Zeitmultiplexsignal dadurch, daß er ohne Hinzunahme irgendwelcher Synchronisierinformation seine Eingangssignale durch einfache Parallel-Serien-Wandlung in ein serielles Ausgangssignal umsetzt. In diesem Falle besteht der Demultiplexer-Teil D3 aus einer entsprechenden Serien-Parallel-Wandler-Anordnung. Diese Anordnung hat aber keine Synchronisierinformation zur Synchronisation mit dem Multiplexer-Teil M3 zur Verfügung. Aus diesem Grunde übernimmt eine im Demultiplexer-Teil D1 enthaltene Synchronisierschaltung nicht nur die Synchronisation dieses Demultiplexer-Teils D1 aufgrund der den Schmalbandsignalen hinzugefügten Synchronisierinformation, sondern auch die Synchronisation des Demultiplexer-Teils D3.
b) Der Multiplexer-Teil M3 erzeugt sein Zeitmultiplex-Ausgangssignal durch Parallel-Serien-Wandlung seiner Eingangssignale unter Hinzunahme von intern erzeugter Synchronisierinformation. In diesem Falle kann der entsprechende Demultiplexer-Teil D3 seinen Serien-Parallel-Wandler aufgrund dieser Synchronisierinformation mit seinem im Multiplexer M3 enthaltenen Gegenstück synchronisieren.
c) Der Multiplexer-Teil M3 besteht aus einem einen Leitungscode erzeugenden Codewandler und einem nachgeschalteten Parallel-Serien-Wandler. Entsprechend besteht der Demultiplexer-Teil D3 aus einem Serien-Parallel-Wandler und einem nachgeschalteten den Leitungscode decodierenden Codewandler. In diesem Falle verwendet der in D3 enthaltene Codewandler die im Leitungscode enthaltene Coderedundanz oder die Eigenschaften des Leitungscodes zur Synchronisation des ihm vorgeschalteten Serien-Parallel-Wandlers. An späterer Stelle werden vorteilhafte Beispiele hierfür angegeben.

Charakteristisch für das Ausführungsbeispiel nach Fig. 1a sowie für die übrigen noch zu erläuternden Ausführungsbeispiele des Multiplexers ist das Merkmal, daß der Multiplexer voll transparent, d. h. unabhängig vom Inhalt seiner Eingangssignale, arbeitet.

Beim Ausführungsbeispiel nach den Figuren 2a und 2b hat der erste Teil M10 des Multiplexers 110 16 parallele Eingänge SS₁ bis SS₁₆ für 16 Schmalbandsignale. Der zweite Multiplexer-Teil M20 hat vier parallele Eingänge BB₁ bis BB₄ für 4 Breitbandsignale.

Der erste Multiplexer-Teil M10 faßt seine 16 Eingangssignale und eine intern mit derselben Bitfolgefrequenz erzeugte Synchronisierinformation zu einem Schmalband-Multiplexsignal mit der Bitfolgefrequenz von 34,816 Mbit/s zusammen, das vom Ausgang des Teils M10 über den Schalter S zum Eingang mit der Nr. 17 des dritten Teils M30 des Multiplexers gelangt.

Der zweite Teil M20 des Multiplexers teilt jedes seiner Breitband-Eingangssignale in vier parallele Digitalsignale auf, so daß auf die Eingangsleitungen Nr. 1 bis 16 des dritten Multiplexer-Teils M30 16 Digitalsignale B₁ bis B₁₆ gelangen, die jeweils eine Bitfolgefrequenz von 34,816 Mbit/s haben. Wie bei Fig. 1a kann das Schmalband-Multiplexsignal auch extern gebildet und am Eingang SM eingegeben werden. Der Demultiplexer 210 in Fig. 2b enthält drei Teile D10, D20 und D30, die den Multiplexer-Teilen M10, M20 und M30 entsprechen und keiner eigenen Erläuterung bedürfen. Hinsichtlich der Funktion des Multiplexer-Teils M30 und des zugehörigen Demultiplexer-Teils D30 gilt das vorstehend für die Teile M3 und D3 Gesagte.

Im ersten Teil des Multiplexers können auch mehrere, insbesondere zwei, Schaltungen der mit M10 bezeichneten Art parallel nebeneinander angeordnet sein, um mehrere Schmalband-Multiplexsignale mit gleicher Bitfolgefrequenz zu bilden. Ein zweites Schmalband-Multiplexsignal würde dann einem 18ten Eingang des Multiplexer-Teils M30 zugeführt. Dies gilt auch für das Ausführungsbeispiel nach den Figuren 1a und 1b.

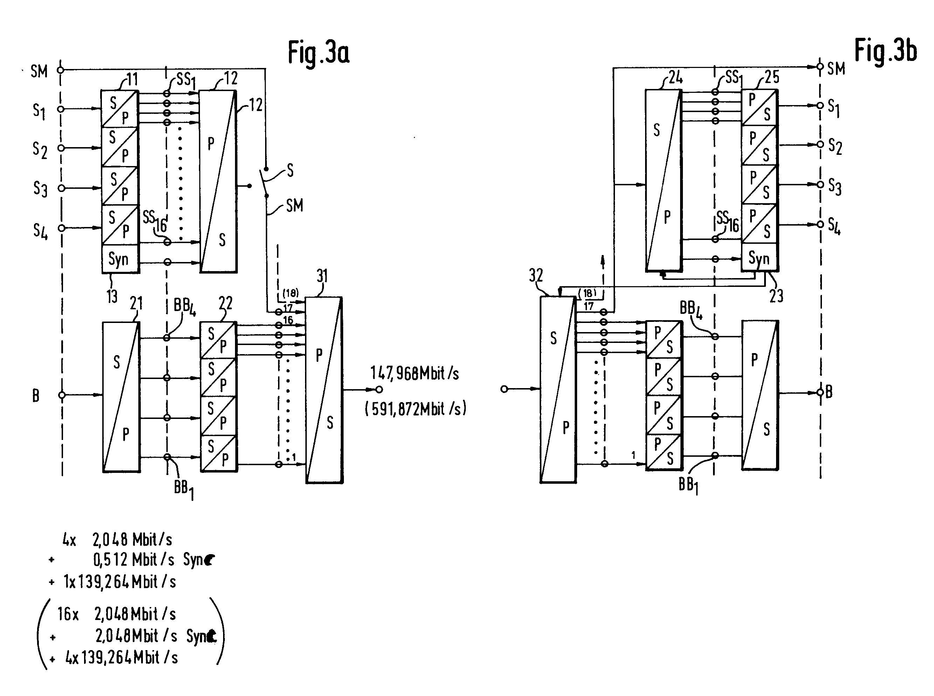

Die Figuren 3a und 3b zeigen eine detailliertere Ausführungsform der bisher beschriebenen Multiplexer/Demultiplexer, die in der Lage ist, sowohl die Multiplexer-/Demultiplexer-Funktion nach Fig. 1a/Fig. 1b als auch die Multiplexer-/Demultiplexer-Funktion nach Fig. 2a/Fig. 2b zu erfüllen. Wie der Multiplexer nach Fig. 1a hat der Multiplexer nach Fig. 3a vier parallele Eingänge S₁ bis S₄ für Schmalbandsignale und einen Eingang B für ein Breitbandsignal, sowie einen Eingang SM für ein extern gebildetes Schmalband-Multiplexsignal.

Der in Fig. 1a mit M1 bezeichnete erste Multiplexer-Teil besteht hier aus einer Serien-Parallel-Wandler-Anordnung 11, einer Schaltung 13 zum Erzeugen eines Synchronisierinformation und andere Informationen enthaltenden Digitalsignals und einem Parallel-Serien-Wandler 12. Die Serien-Parallel-Wandler-Anordnung 11 setzt jedes ihrer Eingangssignale in vier parallele Digitalsignale um, so daß 16 Digitalsignale, entstehen, und die Schaltung 13 zum Erzeugen des Synchronisierinformation und andere Informationen enthaltenden Digitalsignals fügt ein 17tes Signal mit derselben Bitfolgefrequenz hinzu. Diese 17 parallelen Digitalsignale setzt der Parallel-Serien-Wandler 12 in das Schmalband-Multiplexsignal um.

Der in Fig. 1a mit M2 bezeichnete zweite Teil des Multiplexers besteht bei Fig. 3a aus einem Serien-Parallel-Wandler 21, der sein Eingangssignal in vier parallele Signale aufteilt, und aus einer Serien-Parallel-Wandler-Anordnung 22, die wiederum jedes dieser vier Signale in vier parallele Signale aufteilt, so daß die 16 Ausgangs-Signale des zweiten Multiplexer-Teils entstehen.

Wenn dieser Multiplexer wie der in Fig. 1a gezeigte vier Schmalbandsignale und ein Breitbandsignal zusammenfassen soll, so werden die vier Schmalbandsignale an die Eingänge S₁ bis S₄ und das Breitbandsignal an den Eingang B angelegt. Die Schaltung 13 erzeugt ihr Digitalsignal mit einer Bitfolgefrequenz von 512 kbit/s, und der Parallel-Serien-Wandler 12 faßt 17 Eingangssignale mit dieser Bitfolgefrequenz zu einem Schmalband-Multiplexsignal mit der Bitfolgefrequenz 8,704 Mbit/s zusammen. Dieselbe Bitfolgefrequenz hat jedes der 16 Digitalsignale, die mittels der Serien-Parallel-Wandler-Anordnung 21, 22 gewonnen werden.

Wenn der Multiplexer wie der in Fig. 2a gezeigte 16 Schmalbandsignale und vier Breitbandsignale zusammenfassen soll, so wird er wie folgt in einer zweiten Betriebsart verwendet: Bei dieser zweiten Betriebsart sind mit nicht gezeigten Mitteln die 16 Verbindungsleitungen zwischen den Anordnungen 11 und 12 und die vier Verbindungsleitungen zwischen den Anordnungen 21 und 22 unterbrochen, und die 16 Eingänge des Parallel-Serien-Wandlers 12 und die vier Eingänge der Serien-Parallel-Wandler-Anordnung 22 sind mit entsprechenden externen Eingängen verbunden, so daß an die 16 Eingänge des Parallel-Serien-Wandlers 12 die 16 Schmalbandsignale und an die vier Eingänge BB₁ bis BB₄ der Serien-Parallel-Wandler-Anordnung 22 vier Breitbandsignale direkt angelegt werden können. Der 17te Eingang des Parallel-Serien-Wandlers 12 erhält in diesem Falle von der Schaltung 13 oder einer externen Schaltung ein Digitalsignal mit einer Bitfolgefrequenz von 2,048 Mbit/s, das eine Synchronisierinformation und andere Informationen enthält. Mit diesen Eingangssignalen liefert der Parallel-Serien-Wandler 12 an seinem Ausgang ein Schmalband-Multiplex-Signal mit einer Bitfolgefrequenz von 34,816 Mbit/s, und an den Ausgängen des Serien-Parallel-Wandler-Anordnung 22 erscheinen 16 Digitalsignale mit derselben Bitfolgefrequenz.

Wie oben bereits angedeutet, kann der dritte Teil des Multiplexers im einfachsten Falle aus einem Parallel-Serien-Wandler bestehen, der seine parallelen Eingangssignale zum Zeitmultiplex-Ausgangssignal zusammenfaßt. Dieser Fall ist in Fig. 3a gezeigt, wobei der Parallel-Serien-Wandler mit 31 und der entsprechende im Demultiplexer nach Fig. 3b enthaltene Serien-Parallel-Wandler mit 32 bezeichnet ist. Wie bereits oben erwähnt, wird in diesem Fall der Serien-Parallel-Wandler 32 von derselben Synchronisierschaltung 23 synchronisiert, die auch den zur Auflösung des Schmalband-Multiplexsignals vorgesehenen Teil 24, 25 des Demultiplexers synchronisiert. Im übrigen ist der Demultiplexer nach Fig. 3b in genau entsprechender Weise wie der Multiplexer nach Fig. 3a aufgebaut und bedarf daher keiner näheren Erläuterung. Zum Multiplexer nach Fig. 3a ist noch zu erwähnen, daß die Bitfolgefrequenz seines Zeitmultiplex-Ausgangssignals bei der ersten Betriebsart gleich 147,968 Mbit/s und bei der zweiten Betriebsart gleich 591,872 Mbit/s ist. Wie oben bereits erwähnt, kann auch eine 18te Eingangsleitung des Parallel-Serien-Wandlers 31 vorgesehen sein, an die ein weiteres Schmalband-Multiplexsignal anlegbar ist.

Schließlich erlaubt der Multiplexer nach Fig. 3a (und der entsprechende Demultiplexer nach Fig. 3b) noch eine dritte Betriebsart, bei der die 16 Verbindungsleitungen zwischen der Serien-Parallel-Wandler-Anordnung 22 und dem Parallel-Serien-Wandler 31 unterbrochen sind und dessen 16 Eingänge mit 16 externen Eingängen des Multiplexers verbunden sind, so daß 16 Digitalsignale anliegen, die, in ihrer Bitfolgefrequenz zum jeweils an den übrigen Eingängen anliegenden Schmalband-Multiplexsignal oder Schmalband-Multiplexsignalen passen. Z. B. können in dieser Betriebsart 17 (oder 18) Schmalbandsignale, von denen eines die Synchronisierinformation beinhaltet, im Parallel-Serien-Wandler 31 zu einem Schmalband-Multiplex-Signal zusammengefaßt werden.

Die Figuren 3a und 3b zeigen, daß ein derartig aufgebauter Multiplexer mit seinen verschiedenen Betriebsarten für verschiedene Multiplexaufgaben geeignet ist, ohne daß der Schaltungsaufbau geändert werden muß. Es müssen lediglich die zu jeder Betriebsart passenden Takte angelegt werden.

Der oben erwähnte Fall, daß im dritten Multiplexer-Teil (M3, M30 in Fig. 1a, Fig. 2a) Synchronisierinformation erzeugt und den übrigen Eingangssignalen dieses Multiplexer-Teils hinzugefügt wird, und daß der entsprechende Demultiplexer-Teil sich aufgrund dieser Synchronisierinformation mit seinem Gegenstück im Multiplexer synchronisiert, ist in keiner der Figuren gezeigt. Die im Zusammenhang mit den Figuren 3a und 3b gegebenen Erläuterungen für die anderen Multiplexer- und Demultiplexer-Teile gelten hierfür entsprechend.

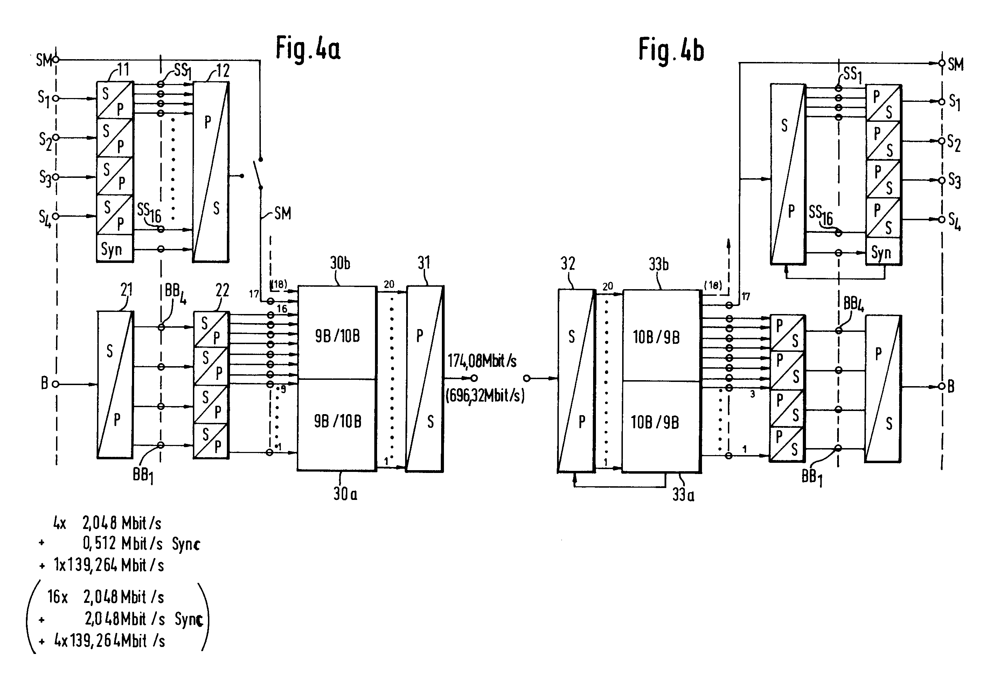

In den Figuren 4a und 4b ist ein Beispiel für den oben erwähnten Fall gezeigt, bei dem der dritte Teil aus einem einen Leitungscode erzeugenden Codewandler und einem nachgeschalteten Parallel-Serien-Wandler besteht. Bei diesem Beispiel werden, wie oben im Zusammenhang mit Fig. 3a und 3b erläutert, im ersten und zweiten Teil des Multiplexers 16 Digitalsignale, die von einem oder mehreren Breitbandsignalen abgeleitet sind, und zwei Schmalbandsignale gewonnen und diese 18 Digitalsignale mit gleicher Bitfolgefrequenz 18 Paralleleingängen des dritten Multiplexerteils zugeführt. Dieser dritte Multiplexerteil besteht hier aus einem ersten 9B/10B-Codewandler 30a, an den die Leitungen Nr. 1 bis Nr. 9 angelegt werden, aus einem zweiten Codewandler 30b, an den die Leitungen Nr. 10 bis Nr. 18 angelegt werden, und aus einem Parallel-Serien-Wandler 31, der 20 Eingangsleitungen hat, 10 die mit dem Ausgang des ersten Codewandlers 30a und 10, die mit dem Ausgang des zweiten Codewandlers 30b verbunden sind.

Ein solcher Codewandler dient in erster Linie dazu, das über die Übertragungsstrecke zu übertragende Multiplexsignal in ein Signal mit den für die jeweilige Übertragungsstrecke erforderlichen Eigenschaften, (konstanter Gleichstrommittelwert, gute Synchronisationseigenschaften und gute Fehlererkennungseigenschaften) umzusetzen. Der zu diesem Zwecke erzeugte Code wird als Leitungscode bezeichnet. Ausführlich behandelt ist das Problem der Leitungscodierung für optische Systeme in einem Artikel von R.M.Brooks und A.Jessop: "Line coding for optical fiber systems", Int. J. Electronics, Vol. 55, No. 1, 81-120.

Für das vorliegende System erscheint ein sogenannter 9B/10B-Codewandler geeignet, der 9 parallel an seinen Eingängen anliegende Bits in 10 parallele Ausgangsbits umsetzt, so daß für die im vorliegenden Beispiel zu verarbeitenden 18 Eingangssignale zwei solche Codewandler vorgesehen sind. Ein Ausführungsbeispiel für einen nB/(n+1)B-Codewandler ist Gegenstand der älteren deutschen Patentanmeldung P 34 42 477.

Ein 9B/10B-Codewandler erscheint als guter Kompromiß zwischen einer ausreichenden Coderedundanz und dem dafür notwendigen Schaltungsaufwand.

Da der Codewandler eine Vielzahl von Signalen parallel verarbeitet, hat er einen Verarbeitungstakt, der niedrig ist gegenüber der Übertragungskapazität des Systems und der eine Realisierung des größten Teils des Multiplexers/Demultiplexers in CMOS-Technologie erlaubt. Bei der oben genannten ersten Betriebsart (vier Schmalbandsignale und ein Breitbandsignal) hat das Ausgangssignal des Multiplexers nach Fig. 4a eine Bitfolgefrequenz von 174,08 Mbit/s und bei der zweiten Betriebsart (16 Schmalbandsignale und 4 Breitbandsignale) ein Bitfolgefrequenz von 696,32 Mbit/s.

Der dem dritten Multiplexer-Teil entsprechende Demultiplexer-Teil hat einen entsprechenden Aufbau, d. h. er besteht aus einem Serien-Parallel-Wandler 32 und einem nachgeschalteten Leitungscode-Decodierer, im vorliegenden Beispiel aus zwei parallel zueinander angeordneten 10B/9B-Codewandlern 33a und 33b, von denen der eine die ersten 10 Digitalsignale und der andere die anderen 10 Digitalsignale von den 20 Parallelausgängen des Serien-Parallel-Wandlers 32 verarbeitet. Jeder dieser Codewandler setzt durch Anwendung der dem Leitungscode zugrundeliegenden Coderegel sein 10-Bit-Eingangswort in ein 9Bit-Ausgangswort um und registriert einen Codefehler, wenn die Coderegel nicht erfüllt ist. Die bei der Umsetzung entstandenen 18 parallelen Ausgangssignale werden in den beiden übrigen Demultiplexer-Teilen wie im Zusammenhang mit den vorstehend erläuterten Figuren gezeigt verarbeitet.

Synchronisiert wird der Serien-Parallel-Wandler 32 mit dem sendeseitigen Parallel-Serien-Wandler 31 dadurch, daß einer der beiden 10B/9B-Codewandler, z. B. der Codewandler 33a eine Synchronisierschaltung hat, die bei Erreichen einer bestimmten Codefehlerhäufigkeit entscheidet, daß ein Synchronisationsfehler vorliegt, und dann ein Steuersignal zum Serien-Parallel-Wandler 32 gibt, das dessen Rahmenposition um ein Bit verschiebt. Hat der eine der beiden Codewandler seinen Synchronismus gefunden, so ist automatisch auch der andere im synchronen Zustand. Zur Beschleunigung des Synchronisationsvorgangs ist es auch möglich, in jedem der beiden Codewandler die Codefehlerhäufigkeit festzustellen und eine Synchronisierschaltung vorzusehen, die durch Überwachung der beiden Codefehlerhäufigkeiten die Synchronisation steuert, d. h. es wird in diesem Falle jedes 20-Bit-Ausgangswort des Serien-Parallel-Wandlers 32 in seiner Gesamtheit zur Synchronisation verwendet.

Es gibt eine Vielzahl von anderen Möglichkeiten, die parallelen Eingangssignale des dritten Multiplexer-Teils (M3, M30 in Fig. 1a, Fig. 2a) durch Codewandlung und anschließende Parallel-Serien-Wandlung in das zu übertragende Multiplexsignal umzusetzen.

Beispielsweise kann auch jedem der beiden Codewandler ein eigener Parallel-Serien-Wandler nachgeschaltet werden, dessen beide Ausgangssignale in einem weiteren Parallel-Serien-Wandler zusammengefaßt werden, empfangsseitig entsprechend, wie dies in der oben genannten älteren deutschen Patentanmeldung gezeigt ist.

Es erscheint auch möglich, die 18 Eingangssignale in einem einzigen 18B/20B-Codewandler mit nachgeschaltetem Parallel-Serien-Wandler zu verarbeiten, entsprechend im Demultiplexer.

Allen diesen Ausführungen ist das Prinzip gemeinsam, daß die Einrichtungen zur Erzeugung des Leitungscode und zur Decodierung des Leitungscode Bestandteile des Multiplexers/-Demultiplexers sind und daß eine zu Zwecken der Demultiplexer-Synchronisierung üblicherweise zu übertragende Synchronisierinformation nicht notwendig ist, da diese Information im Leitungscode ohne besonderen Aufwand enthalten ist.

Der Hauptvorteil der Erfindung liegt also darin, daß für ein dienstintegriertes Breitbandkommunikationssystem mit Schmalband- und Breitbandsignalen eine variable, aufwandsgünstige Lösung für einen Multiplexer-Demultiplexer angegeben ist, die eine Integration der Einrichtungen zur Erzeugung und zur Decodierung des Leitungscodes in den Multiplexer/Demultiplexer erlaubt.

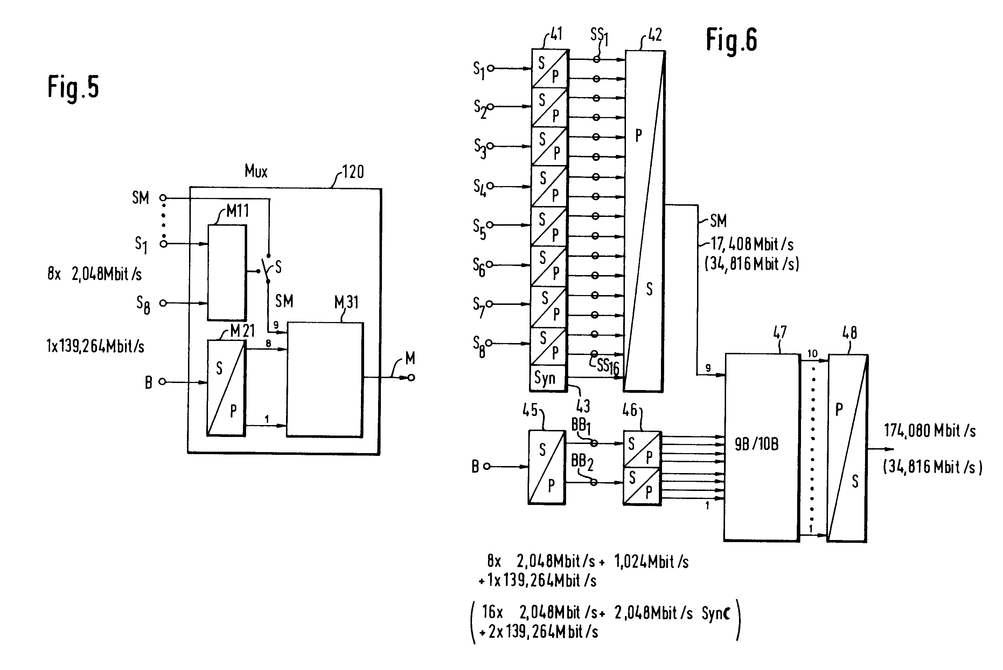

Fig. 5 zeigt den Grundaufbau eines erfindungsgemäßen Multiplexers zum Zusammenfassen von 8 Schmalbandsignalen und einem Breitbandsignal. Die 8 Schmalbandsignale liegen an den 8 parallelen Eingängen S₁ bis S₈ des ersten Teils M11 des Multiplexers 120, der diese unter Hinzunahme eines, Synchronisierinformation enthaltenden, Digitalsignals mit 1,024 Mbit/s zu einem Schmalband-Multiplexsignal von 17,048 Mbit/s zusammenfaßt. Dieses Schmalband-Multiplexsignal gelangt vom Ausgang des Multiplexer-Teils M11 über einen Schalter S auf eine mit 9 bezeichnete Eingangsleitung des dritten Multiplexer-Teils M31.

Das Breitbandsignal wird an den Eingang B angelegt und gelangt von dort auf eine Serien-Parallel-Wandler-Anordnung M21, die den zweiten Teil des Multiplexers 120 bildet und aus dem Breitbandsignal 8 parallele Digitalsignale mit der einheitlichen Bitfolgefrequenz von 17,408 Mbit/s gewinnt.

Der dritte Multiplexer-Teil M31 setzt seine 9 parallelen Eingangssignale in das an seinem Ausgang M erscheinende Zeitmultiplexsignal um. Die oben zu den Multiplexer-Teilen M3, Fig. 1a und M30, Fig. 2a gegebenen Erläuterungen gelten auch für diesen Multiplexer-Teil M31.

Auch für den Multiplexer-Grundaufbau nach Fig. 5 lassen sich Ausführungsformen angeben, die eine Verwendung in unterschiedlichen Betriebsarten für jeweils eine andere Anzahl von Schmalband- und Breitbandsignalen erlauben. Ein Beispiel hierfür ist in Fig. 6 angegeben.

In diesem Beispiel besteht der erste Multiplexer-Teil, der in Fig. 5 mit M11 bezeichnet ist, aus einer Anordnung 41 von Serien-Parallel-Wandlern, einer Schaltung 43 zum Erzeugen von Synchronisierinformation und einem Parallel-Serien-Wandler 42. Der zweite Multiplexer-Teil, der in Fig. 5 mit M21 bezeichnet ist, besteht bei Fig. 6 aus einem Serien-Parallel-Wandler 45 und einer Anordnung 46 von zwei Serien-Parallel-Wandlern.

In der Anordnung 41 wird jedes an einen der Eingänge S₁ bis S₈ angelegte Schmalbandsignal in zwei Schmalbandsignale mit jeweils 1,024 Mbit/s aufgeteilt, in der Schaltung 43 ein Synchronisierinformation enthaltendes Digitalsignal mit derselben Bitfolgefrequenz erzeugt, und diese 17 Digitalsignale werden im Parallel-Serien-Wandler 42 zum Schmalband-Multiplexsignal mit einer Bitfolgefrequenz 17,408 Mbit/s zusammengefaßt. Durch Aufteilung des Breitbandsignals in zwei Digitalsignale und jedes dieser Breitbandsignale in vier parallele Digitalsignale werden 8 Digitalsignale gewonnen, deren Bitfolgefrequenz gleich der des Schmalband-Multiplexsignals ist.

In einer zweiten Betriebsart werden den 17 Eingängen der Parallel-Serien-Wandlers 42 entsprechend der oben erläuterten Weise 16 Schmalbandsignale und ein Synchronisierinformation enthaltendes Digitalsignal mit derselben Bitfolgefrequenz von 2,048 Mbit/s zugeführt, so daß an dessen Ausgang ein Schmalband-Multiplexsignal von 34,816 Mbit/s entsteht, und es werden den beiden Eingängen der Serien-Parallel-Wandler-Anordnung 46 zwei Breitbandsignale zugeführt, die in dieser Anordnung in 8 Digitalsignale mit derselben Bitfolgefrequenz von 34,816 Mbit/s aufgeteilt werden.

Eine dritte Möglichkeit wäre diejenige, bei der 9 parallele Signale mit untereinander gleicher Bitfolgefrequenz an 9 nicht gezeigte Eingänge des Multiplexers angelegt werden, die in dieser Betriebsart direkt mit den 9 Eingängen des dritten Multiplexer-Teils verbunden sind.

Der dritte Multiplexer-Teil, der in Fig. 5 mit M31 bezeichnet ist, besteht vorzugsweise aus einem 9B/10B-Codewandler 47 der im Zusammenhang mit Fig. 4a erläuterten Art und einem nachgeschalteten Parallel-Serien-Wandler 48.

Dieser Multiplexer nach Fig. 6 liefert bei der ersten Betriebsart ein Zeitmultiplex-Signal mit einer Bitfolgefrequenz von 174,08 Mbit/s und bei der zweiten Betriebsart ein Zeitmultiplexsignal mit einer Bitfolgefrequenz von 348,16 Mbit/s.

Der dem Demultiplexer nach Fig. 6 entsprechende Teil ist in umgekehrter Weise aufgebaut und daher nicht in einer Zeichnung dargestellt. Die Vorteile hinsichtlich der Leitungscodierung und der Synchronisierung, die anhand von Fig. 4a und 4b erläutert worden sind, gelten entsprechend.

Es gibt eine große Anzahl von anderen Ausführungsbeispielen des anhand der Figuren 1a, 2a und 5 gezeigten erfindungsgemäßen Multiplexer-Grundaufbaus und der entsprechenden Demultiplexer. Einige von ihnen werden im folgenden beschrieben.

Beispielsweise kann man einen Multiplexer aufbauen, der in seinem ersten Teil eine Anordnung von Serien-Parallel-Wandlern hat, die 32 Schmalbandsignale in 64 Digitalsignale mit 1,024 Mbit/s aufteilt, ferner eine Schaltung, die vier weitere Digitalsignale mit jeweils derselben Bitfolgefrequenz, einschließlich Synchronisierinformation, bereitstellt und einen Parallel-Serien-Wandler, der diese 68 Digitalsignale zu einem Schmalband-Multiplexsignal mit der Bitfolgefrequenz von 69,632 Mbit/s zusammenfaßt. Der zweite Teil dieses Multiplexers gewinnt durch Serien-Parallel-Wandlung aus vier Breitbandsignalen acht Digitalsignale mit der Bitfolgefrequenz von jeweils 69,632 Mbit/s, und der dritte Teil der vorzugsweise wie der in Fig. 6 aufgebaut ist, faßt diese neun Digitalsignale zum Zeitmultiplexsignal zusammen.

Statt eines 9B/10B-Codewandlers könnte auch ein 9B/12B-Codewandler verwendet werden, der eine größere Coderedundanz, jedoch auch einen größeren Schaltungsaufwand hat.

Eine interessante Abwandlung wäre diejenige, bei der auch innerhalb des ersten Multiplexer-Teils ein nB/(n+m)B-Codewandler vorhanden ist, der, wie in Fig. 6 oder in Fig. 4a für den dritten Multiplexer-Teil gezeigt, dem am Ausgang befindlichen Parallel-Serien-Wandler vorgeschaltet ist. In diesem Falle hätte man bereits für die Übertragung jedes Schmalband-Multiplexsignals dieselben Vorteile, die im Zusammenhang mit der Fig. 4a und Fig. 4b für das Gesamtsystem erläutert sind. Daraus ergäbe sich die Möglichkeit, das oder die derart codierten Schmalband-Multiplexsignale in einer weiteren Betriebsart über geeignete Schaltmittel an einen oder mehrere separate Ausgänge herauszuführen und diese über die Lichtwellenleiterübertragungsstrecke zum entsprechend aufgebauten Demultiplexer zu übertragen, beispielsweise wenn oder solange eine Übertragung von Breitbandsignalen überhaupt nicht notwendig ist. Dies ist sinnvoll für Teilnehmer eines Breitband-Kommunikationssystems, die in Richtung zur Ortsvermittlung überhaupt keine Breitbandsignale zu übertragen haben, jedoch sich die Möglichkeit dafür offenhalten wollen, z. B. für die spätere Einrichtung eines Bildfernsprechanschlusses.

In diesem Falle handelt es sich um einen vielseitig verwendbaren Multiplexer, der zwar (in einer Grund-Betriebsart) Breitbandsignale und Schmalbandsignale zusammenfassen kann, jedoch in der vorstehend erläuterten Sonder-Betriebsart nur ein Schmalbandmultiplexer mit integriertem Leitungscodierer ist. Entsprechendes gilt für den Demultiplexer.

Weitere Abwandlungen der gezeigten Ausführungsbeispiele ergeben sich durch eine andere Festlegung der Bitfolgefrequenz für ein Breitbandsignal. Wenn das Breitbandsignal z.B. eine Bitfolgefrequenz von 130,56 Mbit/s hat, so wird es im ersten Multiplexer-Teil nicht, wie in Fig. 1a gezeigt, in 16 Digitalsignale, sondern in 15 Digitalsignale aufgeteilt, deren Bitfolgefrequenz 8,704 beträgt.

Auch eine solche Ausführungsform, bei der der erste Multiplexer-Teil nicht aus einer Serien-Parallel-Wandler/Parallel-Serien-Wandler-Anordnung besteht, sondern aus einem Schmalband-Multiplexer, der die Schmalbandsignale und die Synchronisierinformation in einen geeigneten Pulsrahmen einfügt (entsprechender Teil im Demultiplexer), liegt im Rahmen der Erfindung. Zwar ist in diesem Multiplexer-/Demultiplexer-Teil dann ein erhöhter Speicher- und Steueraufwand erforderlich, aber trotzdem hat der gesamte Multiplexer/Demultiplexer die oben genannten Vorteile, daß er variabel verwendbar und einschließlich Leitungscodierer/-decodierer in höchstintegrierter Technik herstellbar ist.

## Patentansprüche

1. Dienstintegriertes digitales Nachrichtenübertragungssystem, bei dem ein aus Schmalband- und Breitbandsignalen zusammengesetztes Zeitmultiplexsignal übertragen wird, mit einem sendeseitigen Multiplexer und einem empfangsseitigen Demultiplexer,
**dadurch gekennzeichnet**,
daß der Multiplexer in einer Grund-Betriebsart
- in einem ersten Teil (M1, M10, M11) durch Zusammenfassen der Schmalbandsignale ein Schmalband-Multiplexsignal (SM) oder mehrere Schmalband-Multiplexsignale mit einer bestimmten Bitfolgefrequenz gewinnt, die geringer ist als die Bitfolgefrequenz der Breitbandsignale
- in einem zweiten Teil (M2, M20, M21) durch Aufteilen jedes Breitbandsignals Digitalsignale gewinnt, deren Bitfolgefrequenz einheitlich und gleich der des Schmalband-Multiplexsignals ist,
- in einem dritten Teil (M3, M30, M31) diese Digitalsignale zusammen mit dem Schmalband-Multiplexsignal oder den Schmalband-Multiplexsignalen bitweise zum Zeitmultiplexsignal (M) zusammenfaßt,
und daß der Demultiplexer (Fig. 1b, Fig. 2b) in entsprechenden Teilen (D1, D2, D3; D10, D20 , D30) dieses Zeitmultiplexsignal (M) wieder auflöst.

2. System nach Anspruch 1, dadurch gekennzeichnet, daß der erste Teil (M1, M10, M11) des Multiplexers (100, 110, 120) für jedes zu gewinnende Schmalband-Multiplexsignal (SM) eine Serien-Parallel-Wandler/Parallel-Serien-Wandler-Anordnung (11, 12; 41, 42) enthält, die aus einer Anzahl von Schmalband-Eingangssignalen unter Hinzunahme von Synchronisierinformation das Schmalband-Multiplexsignal (SM) gewinnt,
daß der zweite Teil (M2, M20, M21) des Multiplexers (100, 110, 120) eine Serien-Parallel-Wandler-Anordnung (21, 22; 45, 46) zum Aufteilen jedes Breitbandsignals in die Digitalsignale mit der einheitlichen Bitfolgefrequenz enthält,
und daß der dritte Teil (M3, M30, M31) des Multiplexers (100, 110, 120) einen Parallel-Serien-Wandler (31, 48) enthält, der diese Digitalsignale zusammen mit dem Schmalband-Multiplexsignal (SM) unter Hinzunahme von Synchronisierinformation oder ohne Hinzunahme von Synchronisierinformation zum Zeitmultiplexsignal (M) zusammenfaßt.

3. System nach Anspruch 1 oder 2, dadurch gekennzeichnet, daß der Demultiplexer (200, 210, Fig.3b, Fig.4b) Teile (D2, D3; D20, D30) enthält, die dem zweiten (M2, M20) und dritten Teil (M30, M31) des Multiplexers entsprechen und aus dem Zeitmultiplexsignal (M) das Schmalband-Multiplexsignal (SM) und die Breitbandsignale wiedergewinnen, und einen Teil (D1, D10) zum Auflösen des Schmalband-Multiplexsignals (SM) in die Schmalbandsignale enthält, der dem ersten Teil (M1, M10) des Multiplexers entspricht.

4. System nach Anspruch 3, dadurch gekennzeichnet, daß der Demultiplexer (200, 210, Fig. 3b, Fig. 4b) einen Ausgang hat, an dem das Schmalband-Multiplexsignal (SM) unaufgelöst erscheint und daß es von diesem Ausgang über eine Leitung zu mehreren örtlich auseinanderliegenden Schmalband-Demultiplexern übertragen wird, die es jeweils in die Schmalbandsignale auflösen.

5. System nach Anspruch 1 oder 2, dadurch gekennzeichnet, daß der dritte Teil (M3, M30, M31) des Multiplexers aus einem parallele Signale verarbeitenden nB/(n+m)B-Codewandler (47) oder mehreren parallel angeordneten nB/(n+m)B-Codewandlern (30a, 30b) und einem nachgeschalteten Parallel-Serien-Wandler (31, 48) besteht, wobei ein Codewandler einen die Synchronisierinformation enthaltenden Leitungscode erzeugt, und daß der entsprechende Teil des Demultiplexers (Fig. 4b) aus einem Serien-Parallel-Wandler (32) und aus einem nachgeschalteten (n+m)B/nB-Codewandler oder mehreren parallel angeordneten (n+m)B/nB-Codewandlern (33a, 33b) besteht, wobei der (n+m)B/nB-Codewandler (33a) den Serien-Parallel-Wandler (32) mit dem entsprechenden im Multiplexer (Fig. 4a, Fig. 6) enthaltenen Parallel-Serien-Wandler (31, 48) synchronisiert.

6. System nach Anspruch 1 oder 2, dadurch gekennzeichnet, daß der dritte Teil (M3, M30) des Multiplexers aus einem Parallel-Serien-Wandler und einer Quelle für Synchronisierinformation besteht, die der Parallel-Serien-Wandler hinzunimmt, und daß der entsprechende Teil (D3, D30) des Demultiplexers aus einem Serien-Parallel-Wandler und einer ihn synchronisierenden Synchronisierschaltung besteht.

7. System nach einem der vorstehenden Ansprüche, dadurch gekennzeichnet, daß der Multiplexer (Fig. 3a, Fig. 4a, Fig. 6) in unterschiedlichen Betriebsarten betreibbar ist, derart, daß in einer ersten Betriebsart eine erste Anzahl von Schmalband- und Breitbandsignalen (S₁ bis S₄, B; S₁ bis S₈, B) den gesamten Multiplexer durchläuft, in einer zweiten Betriebsart eine zweite Anzahl von Schmalband- und Breitbandsignalen (SS₁ bis SS₁₆, BB1 bis BB₄; SS₁ bis SS₁₆, BB₁, BB₂) nur eine zweite Stufe (12, 22; 42, 46) des ersten (11, 12; 41, 42) und des zweiten Multiplexer-Teils (21, 22; 45, 46) und den dritten Multiplexer-Teil (31; 30, 31; 47, 48) durchläuft und in einer dritten Betriebsart eine dritte Anzahl von Schmalbandsignalen oder Breitbandsignalen nur den dritten Multiplexer-Teil (31; 30, 31; 47, 48) durchläuft und daß der Demultiplexer in entsprechenden Betriebsarten betreibbar ist.

8. System nach einem der vorstehenden Ansprüche, dadurch gekennzeichnet, daß im ersten Teil (M1, M10, M11) des Multiplexers (100, 110, 120) ein parallele Signale verarbeitender nB/(n+m)B-Codewandler enthalten ist, der einen die Synchronisierinformation enthaltenden Leitungscode für das Schmalband-Multiplexsignal (SM) oder die Schmalband-Multiplexsignale erzeugt und daß im entsprechenden Teil (D1, D10) des Demultiplexers ein parallele Signale verarbeitender (n+m)B/nB-Codewandler enthalten ist, der den Leitungscode decodiert und diesen Demultiplexer-Teil mit dem entsprechenden Multiplexer-Teil synchronisiert.

9. System nach Anspruch 8, dadurch gekennzeichnet, daß der Multiplexer in einer solchen Sonder-Betriebsart betreibbar ist, daß er jedes im Leitungscode codierte Schmalband-Multiplexsignal direkt vom ersten Teil auf einen separaten Ausgang gibt, und daß der Demultiplexer in einer solchen Sonder-Betriebsart betreibbar ist, daß er ein im Leitungscode codiertes Schmalband-Multiplexsignal von einem separaten Eingang direkt auf den dieses Signal auflösenden Demultiplexer-Teil gibt.

## Claims

1. An integrated services digital communications system wherein a time-division-multiplex signal composed of narrow-band and broadband signals is transmitted, comprising a multiplexer at the sending end and a demultiplexer at the receiving end,
**characterized in**
that in a basic mode, the multiplexer
- by combining the narrow-band signals in a first section (M1, M10, M11), derives one (SM) or more narrow-band multiplex signals having a bit rate lower than that of the broadband signals,
- by splitting up each of the broadband signals in a second section (M2, M20, M21), derives digital signals whose bit rate is uniform and equal to that of the narrow-band multiplex signal, and
- combines said digital signals in a third section (M3, M30, M31) with the one or more narrow-band multiplex signals on a bit-by-bit basis to form the time-division-multiplex signal (M), and that the demultiplexer (Fig. 1b, Fig. 2b) demultiplexes said time-division-multiplex signal (M) in corresponding sections (D1, D2, D3; D10, D20, D30).

2. A system as claimed in claim 1, characterized in that the first section (M1, M10, M11) of the multiplexer (100, 110, 120) contains a serial-parallel converter/parallel-serial converter arrangement (11, 12; 41, 42) which forms the narrow-band multiplex signal (SM) from a number of narrow-band input signals and adds synchronizing information,
that the second section (M2, M20, M21) of the multiplexer (100, 110, 120) contains a serial-parallel converter arrangement (21, 22; 45, 46) for splitting up each of the broadband signals into the digital signals of uniform bit rate, and
that the third section (M3, M30, M31) of the multiplexer (100, 110, 120) contains a parallel-serial converter (31, 48) which combines said digital signals with the narrow-band multiplex signal (SM), adding or without adding synchronizing information, to form the time-division-multiplex signal (M).

3. A system as claimed in claim 1 or 2, characterized in that the demultiplexer (Fig. 1b, Fig. 2b, Fig. 3b Fig. 4b) contains sections (D2, D3; D20, D30) which correspond to the second section (M2, M20) and the third section (M30, M31) of the multiplexer and recover the narrow-band multiplex signal (SM) and the broadband signals from the time-division-multiplex signal (M), and a section (D1, D10) for separating the narrow-band multiplex signal (SM) into the narrow-band signals which corresponds to the first section (M1, M10) of the multiplexer.

4. A system as claimed in claim 3, characterized in that the demultiplexer (Fig. 1b, Fig. 2b, Fig. 3b, Fig. 4b) has an output at which the narrow-band multiplex signal (SM) appears in nondemultiplexed form, and that the narrow-band multiplex signal (SM) is transferred from said output over a line to two or more narrow-band demultiplexers located away from one another each of which separates it into the narrow-band signals.

5. A system as claimed in claim 1 or 2, characterized in that the third section (M3, M30, M31) of the multiplexer consists of a parallel-signal processing nB/(n+m)B code converter (47) or two or more parallel-connected nB/(n+m)B code converters (30a, 30b) and a following parallel-serial converter (31, 48), the code converter(s) generating the line code containing the synchronizing information, and that the corresponding section of the demultiplexer (Fig. 4b) consists of a serial-parallel converter (32) followed by an (n+m)B/nB-code converter or two or sore parallel-connected (n+m)B/nB code converters (33a, 33b), the (n+m)B/nB code converter (33a) synchronizing the serial-parallel converter (32) with the corresponding parallel-serial converter (31, 48) contained in the multiplexer (Fig. 4a, Fig. 6).

6. A system as claimed in claim 1 or 2, characterized in that the third section (M3, M30) of the multiplexer consists of a parallel-serial converter and a source of synchronizing information which is added by the parallel-serial converter, and that the corresponding section (D3, D30) of the demultiplexer consists of a serial-parallel converter and a circuit synchronizing the latter.

7. A system as claimed in any one of the preceding claims, characterized in that the multiplexer (Fig. 3a, Fig. 4a, Fig. 6) is operable in different modes, such that, in a first mode, a first number of narrow-band and broadband signals (S₁ to S₄, B; S₁ to S₈, B) pass through the entire multiplexer, that, in a second mode, a second number of narrow-band and broadband signals (SS₁ to SS₁₆, BB₁ to BB₄; SS₁ to SS₁₆, BB₁, BB₂) pass only through a second stage (12, 22; 42, 46) of the first multiplexer section (11, 12; 41, 42) and of the second multiplexer section (21, 22; 45, 46) and through the third multiplexer section (31; 30, 31; 47, 48), and that, in a third mode, a third number of narrow-band or broadband signals pass only through the third multiplexer section (31; 30, 31; 47, 48), and that the demultiplexer is operable in corresponding modes.

8. A system as claimed in any one of the preceding claims, characterized in that the first section (M1, M10, M11) of the multiplexer (100, 110, 120) contains a parallel-signal-processing nB/(n+m)B code converter which generates a synchronizing-information-containing line code for the narrow-band multiplex signal (SM) or the narrow-band multiplex signals, and that the corresponding section (D1, D10) of the demultiplexer contains a parallel-signal-processing (n+m)B/nB code converter which decodes the line code and synchronizes this demultiplexer section with the corresponding multiplexer section.

9. A system as claimed in claim 1, characterized in that the multiplexer is operable in a special mode in which it transfers each line-coded narrow-band multiplex signal directly from the first section to a separate output, and that the demultiplexer is operable in a special mode in which it transfers a line-coded narrow-band multiplex signal from a separate input directly to the demultiplexer section which demultiplexes this signal.

## Revendications

1. Système numérique de transmission d'informations à intégration de services dans lequel un signal à multiplexage temporel composé de signaux à bande étroite et à large bande est transmis, avec un multiplexeur du côté d'émission et un démultiplexeur du côté de la réception, caractérisé en ce que, en mode de service de base, le multiplexeur
- obtient, dans une première partie (M1, M10, M11) par regroupage des signaux à bande étroite, un signal multiplex (SM) à bande étroite ou plusieurs signaux multiplex à bande étroite ayant un débit binaire défini qui est inférieur au débit binaire des signaux à large bande,
- obtient, dans une deuxième partie (M2, M20, M21), par division de chaque signal à large bande des signaux numériques dont le débit binaire est uniforme et égal à celui du signal multiplex à bande étroite,
- regroupe, dans une troisième partie (M3, M30, M31), ces signaux numériques avec le signal multiplex à bande étroite ou les signaux multiplex à bande étroite bit par bit, en un signal à multiplexage temporel (M),
et en ce que le démultiplexeur (fig. 1b, fig. 2b) résout à nouveau ce signal à multiplexage temporel (M) en des parties correspondantes (D1, D2, D3; D10, D20, D30).

2. Système selon la revendication 1, caractérisé
- en ce que la première partie (M1, M10, M11) du multiplexeur (100, 110, 120) comporte un agencement (11, 12; 41, 42) de convertisseurs série-parallèle/convertisseur parallèle-série pour chaque signal multiplex à bande étroite (SM) à récupérer et qui obtient le signal multiplex à bande étroite (SM) à partir d'une pluralité de signaux d'entrée à bande étroite en prenant en compte l'information de synchronisation,
- en ce que la deuxième partie (M2, M20, M21) du multiplexeur (100, 110, 120) comporte un agencement de convertisseurs série-parallèle (21, 22; 45, 46) pour la division de chaque signal à large bande en signaux numériques ayant un débit binaire uniforme,
- et en ce que la troisième partie (M3, M30, M31) du multiplexeur (100, 110, 120) comporte un convertisseur parallèle-série (31, 48) qui réunit ces signaux numériques avec le signal multiplex à bande étroite (SM) en prenant en compte des informations de synchronisation ou sans prendre en compte celles-ci, en un signal à multiplexage temporel (M).

3. Système selon la revendication 1 ou 2, caractérisé en ce que le démultiplexeur (200, 210, figure 3b, figure 4b) comporte des parties (D2, D3; D20, D30) qui correspondent à la deuxième (M2, M20) et à la troisième (M30, M31) partie du multiplexeur et qui réalisent l'extraction du signal multiplex à bande étroite (SM) et des signaux à bande étroite à partir du signal à multiplexage temporel (M), et qui contient une partie (D1, D10) pour séparer le signal multiplex à bande étroite (SM) en signaux à bande étroite et qui correspond à la première partie (M1, M10) du multiplexeur.

4. Système selon la revendication 3, caractérisé en ce que le démultiplexeur (200, 210, figure 3b, figure 4b) a une sortie sur laquelle apparaît le signal multiplex à bande étroite (SM) non-séparé et en ce que ce signal est transmis à partir de cette sortie sur une ligne vers une pluralité de démultiplexeurs à bande étroite et à localisation indépendante, lesquels résolvent ce signal en les signaux respectifs à bande étroite.

5. Système selon la revendication 1 ou 2, caractérisé en ce que la troisième partie (M3, M30, M31) du multiplexeur est composé d'un convertisseur de code nB/(n+m)B (47) réalisant le traitement de signaux parallèles ou de plusieurs convertisseurs nB/(n+m)B de code (30a, 30b) disposés en parallèle suivis d'un convertisseur parallèle-série (31, 48), un convertisseur de code réalisant la génération d'un code de ligne qui contient l'information de synchronisation, et en ce que la partie correspondante du démultiplexeur (figure 4b) est composée d'un convertisseur série-parallèle (32) et d'un convertisseur de code (n+m)B/nB qui le suit, ou de plusieurs convertisseurs de code (n+m)B/nB (33a, 33b) disposés en parallèle, dans lequel le convertisseur de code (n+m)B/nB (33a) réalise la synchronisation du convertisseur série-parallèle (32) avec le convertisseur parallèle-série (31, 48) correspondant faisant partie du multiplexeur (figures 4a, et 6).

6. Système selon la revendication 1 ou 2, caractérisé en ce que la troisième partie (M3, M30) du multiplexeur est composée d'un convertisseur parallèle-série et d'une source d'information de synchronisation qui est reprise par le convertisseur parallèle-série, et en ce que la partie correspondante (D3, D30) du démultiplexeur est composée d'un convertisseur série-parallèle et d'un circuit de synchronisation qui synchronise ce dernier.

7. Système selon l'une des revendications précédentes, caractérisé en ce que le multiplexeur (figure 3a, figure 4a, figure 6) peut être mis en service selon différents modes de façon à ce que, dans un premier mode de service, une première pluralité de signaux à bande étroite et à large bande (S₁ à S₄, B; S₁ à S₈, B) traverse tout le multiplexeur, dans un deuxième mode de service, une deuxième pluralité de signaux à bande étroite et à large bande (SS₁ à SS₁₆, BB₁ à BB₄; SS₁ à SS₁₆, BB₁, BB₂) ne traverse qu'un deuxième étage (12, 22; 42, 46) de la première (11, 12; 41, 42) et de la deuxième partie (21, 22; 45, 46) du multiplexeur et la troisième partie (31; 30, 32; 47, 48) du multiplexeur, et dans un troisième mode de service, une troisième pluralité de signaux à bande étroite ou de signaux à large bande ne traversent qu'une troisième partie (31; 30, 31; 47, 48) de multiplexeur et en ce que le démultiplexeur peut fonctionner dans les modes de service correspondants.

8. Système selon l'une des revendications précédentes, caractérisé en ce que la première partie (M1, M10, M11) du multiplexeur (100, 110, 120) comporte un convertisseur de code nB/(n+m)B pour traitement de signaux parallèles qui génère un code de ligne contenant l'information de synchronisation, pour le signal multiplex à bande étroite (SM) ou les signaux multiplex à bande étroite, et en ce que la partie correspondante du démultiplexeur (D1, D10) comporte un convertisseur de code (n+m)B/nB de traitement de signaux parallèles qui réalise le décodage du code de ligne et la synchronisation de cette partie de démultiplexeur avec la partie correspondant du multiplexeur.

9. Système selon la revendication 8, caractérisé en ce que le multiplexeur peut fonctionner selon un mode particulier de service selon lequel il fournit chacun des signaux multiplex à bande étroite codés dans le code de ligne directement à partir de la première partie sur une sortie indépendante et en ce que le démultiplexeur peut fonctionner selon un mode particulier de service où il fournit un signal multiplex à bande étroite codé dans le code de ligne à partir d'une entrée séparée directement à la partie du démultiplexeur conçue pour résoudre ce signal.
